# EUROPÄISCHE PATENTANMELDUNG

(11) **EP 1 111 554 A2**
(43) Veröffentlichungstag der Anmeldung: **27.06.2001**
(21) Anmeldenummer: 00105515.1
(22) Anmeldetag: 15.03.2000
(51) Int. Cl.: G07F 7/00, G07F 17/20

(54) **Bedienungsgerät für eine Tandem-Reinigungs- und/oder Pflegestation für Kfz**

(30) Priorität: 22.12.1999 DE 19962059
(71) Anmelder: WAP Reinigungssysteme GmbH & Co., 89287 Bellenberg (DE)
(72) Erfinder: Schiller, Hermann,, 89367 Waldstetteen (DE)
(74) Vertreter: Riebling, Peter, Dr.-Ing.

(57) **Zusammenfassung**

Die vorliegende Erfindung hat die Aufgabe SB-Tandem-Reinigungs- und/oder Pflegestationen so weiterzuentwickeln, daß anstelle von bisher zwei Münzern lediglich nur ein Münzer für die Annahme von Münzen oder eines entsprechenden Guthabens mittels Wertkarten verwendet wird. Dadurch werden sowohl bei der Herstellung als auch bei der Wartung die entsprechenden Kosten eingespart.

Ein zusätzlicher Vorteil der Erfindung liegt darin, daß bei teilweise beengten Platzverhältnissen auch ein entsprechender Raumgewinn realisiert wird. Mittels eines entsprechenden Auswahlschalters wird ausgewählt, für welchen Platz, A ober B, das Guthaben in Form einer Münze oder durch Auslesen einer Wertkarte und Abspeichern für den betreffenden Platz A oder B gutgeschrieben wird.

Das bedeutet also, daß aufgrund der vorliegenden Erfindung lediglich nur mehr ein Münzer für die Überprüfung des Guthabens für einen SB-Tandem-Reinigungsplatz von Nöten ist, wodurch sich ein entsprechendes Einsparungspotential ergibt.

## Beschreibung

Die Erfindung betrifft ein Bedienungsgerät für eine Tandem-Reinigungs- und/oder Pflegestation für Kfz nach dem Oberbegriff des Patentanspruches 1.

Tandem-Reinigungs- und/oder Pflegestationen für Kfz sind Stationen auf bzw. in welchen Reinigungs- und/oder Pflegearbeiten im Selbstbedienbetrieb auf zwei getrennten Plätzen A oder B durchgeführt werden, wobei Vorrichtungen dafür vorgesehen sind, die Zeit- oder Wertguthaben in einer Zeit- oder Wertguthabenspeichereinrichtung pro Reinigungs- oder Pflegeplatz durch den Einwurf von Münzen oder durch die Eingabe von Wertkarten, mit der Abbuchung eines entsprechenden Guthabens von der Wertkarte, einzurichten, um den Betrieb der Reinigungs- und/oder Pflegegeräte für einen entsprechenden Zeitraum freizugeben.

Bei herkömmlichen SB-Tandem-Reinigungsstationen wir zur Freischaltung der gewünschten Reinigungsstation jeweils ein dieser betreffenden Seite zugeordneter Münzer, also eine Vorrichtung zur Prüfung der eingeworfenen Münzen, benutzt. Dies bedeutet, daß bei einem SB-Tandem-Reiniger immer zwei Münzer notwendig sind. Daraus ergibt sich ein großer Herstellungsaufwand, welcher zusätzlich einen hohen, nachfolgenden Wartungsaufwand erfordert, der entsprechend der Anzahl der vorhandenen Münzer notwendig ist.

Es müssen also die Münzer zum einen in der gleichen Anzahl wie die SB-Tandem-Reinigungsstellen aufgestellt und eingerichtet werden und zum anderen in der entsprechenden Anzahl eben auch gewartet werden. Dadurch entstehen entsprechende Herstellungs- und Wartungskosten

Der vorliegenden Erfindung liegt nun die Aufgabe zugrunde, sowohl den technischen als auch den finanziellen Aufwand für die Herstellung und auch die Wartung der SB-Tandem-Reinigungs- und/oder Pflegestationen zu minimieren.

Gelöst wird die Aufgabe durch die technische Lehre des Patentanspruches 1.

Bei der vorligenden Erfindung ist es vorgesehen, daß, im Gegensatz zum bisherigen Aufbau von SB-Tandem-Reinigungs- und/oder Pflegestationen, für die Zeit- oder Wertguthabenspeichereinrichtungen auf beiden Seiten bzw. Plätzen A oder B lediglich ein einziger Münzer für die Eingabe von Münzen oder Wertkarten vorhanden ist, welcher in Verbindung mit einer Auswahleinheit ein Guthaben für den ausgewählten Reinigungsplatz A oder B entgegen nimmt.

Ausgehend von der Überlegung, daß der Münzer hier eine Doppelfunktion übernimmt, nämlich die Zahlung annehmen und dann die ihm zugeordnete Arbeitsseite der SB-Tandem-Reinigungsstation für die Nutzung der angeordneten Bedieneinheiten sowie deren Programmauswahl freizugeben, wurde diese Doppelfunktion aufgeteilt.

Wichtig bei der Erfindung ist, daß der Münzer nur noch eine dieser Doppelfunktionen ausführt und zwar die Zahlung akzeptieren. Da es sich bei einer SB-Tandem-Reinigungsstation auf beiden Arbeitsseiten um das selbe Zahlungsmittel nämlich Münze oder ev. auch Wertkarte handelt, genügt hier letztendlich ein Münzer für Erfassung des Guthabens. Die zweite Funktion, die Freigabe der gewünschten Arbeitsseite, übernehmen ein Wahlschlater, zwei Taster oder eine entsprechende Auswahleinheit für den betreffenden Reinigungsplatz. Hier ist beispielsweise jeweils ein Taster einer Arbeitsseite zugeordnet. Die Betätigung der Auswahleinheit kann je nach Auslegung der zugehörigen Steuerung dem Zahlungsvorgang vor- bzw. nachgeschaltet sein. Zusätzlich ist es für den Fall, daß zwei Taster eingesetzt werden, vorgesehen, daß über die Steuerung eine Verriegelung der Taster gegeneinander erfolgt um eine Fehlbedienung auszuschließen. Die Zuordnung der Auswahleinheit zur entsprechenden Arbeitsseite kann über Piktogramme, Pfeile über ein Display oder dgl. realisiert werden.

Anwendbar ist diese Erfindung bei allen SB-Tandem-Reinigungsstation bei denen sich die Münzeinwurfseite für beide Seiten an der selben Stelle befinden.

Zusätzlich bezieht sich diese Erfindung auf verschiedene, jeweils zum Einsatz gebrachte Zahlungsakzeptoren, also nicht nur Münzprüfer (mechanisch, elektronisch) sondern auch Kartenleser aller Art. Die im obigen beschriebenen Taster können auch als Tastschalter, Piezzotaster oder jegliches weiteres elektrisches Schaltinstrument ausgeführt sein, insofern eine selbsttätige Rückstellung des selbigen gewährleistet ist.

Der wesentliche Vorteil dieser Erfindung liegt darin, daß man auf ein teueres, doppelt eingesetztes Bauteil in der Form eines Münzers verzichten kann und dieses durch kostengünstigere Bauteile ersetzt. Dies kommt vor allem bei Einsatz von elektronischen Münzprüfern oder Kartenlesern zum Tragen. Doch selbst beim mechanischen Münzer ergeben sich bereits technische und finanzielle Vorteile durch die Einsparung eines Münzers bzw. Zahlungsakzeptors. Zusätzlich muß noch auf den geringeren Platzbedarf für die Integration von nur einem Zahlungsakzeptor im Gehäuse hingewiesen werden.

Der Einsatz eines einzigen Münzers für eine SB-Tandem-Reinigeranlage erstreckt sich selbstverständlich auf alle Reinigungs- und/oder Pflegestationen für Kfz., also sowohl auf Waschanlagen als auch auf Schmutzsauganlagen und dgl. mehr. Das bedeutet also, die vorliegende Erfindung kann, beispielsweise bei kombinierten SB-Tandem-Reinigungsstationen sowohl bei Wascheinheiten als auch bei Schmutzsaugeeinheiten eingesetzt werden. Es ist dazu lediglich notwendig, daß an einer Seite der Bedienstelle Zugang sowohl von der einen als auch von der anderen Box her ermöglicht wird um diese zu bedienen. Es ist also vorgesehen, daß lediglich ein einziger Zahlungsakzeptor vorhanden ist, und daß das Gerät umschaltbar ist, wobei mittels eines Umschalters entweder der Waschplatz A (bzw. der Saugplatz A) oder der Waschplatz B (bzw. der Saugplatz B) angewählt werden kann, und daß, wenn bei angewählten Waschplatz A eine Münze eingeworfen wird, dann das Zeitkonto des Waschplatzes A aufgefüllt wird, während dessen bei Umschaltung der Auswahleinheit auf den Waschplatz B bei Einwurf einer Münze der Waschplatzes B entsprechend in seinem Zeitkonto aufgewertet wird.

Dies setzt also voraus, daß das Eingabegerät mindestens eine Auswahleinheit, einen einzigen Münzeingabeschlitz und einen dazugehörigen einzigen Münzprüfer aufweist, wobei, in einer speziellen Ausführungsform der vorliegenden Erfindung, die Guthabenzeit zusätzlich optisch angezeigt wird. Statt eines drehbaren Wahlschalters können selbstverständlich auch Drucktasten oder andere Eingabetasten verwendet werden. Es können auch Berührungstasten sein oder es kann so gar in einer weiteren Ausführungsform der vorliegenden Erfindung ein Berührungsbildschirm vorgesehen werden, auf dem dann die entsprechenden Wahlmöglichkeiten angewählt werden. Auf diesem Berührungsbildschirm können dann auch noch die Zeitkonten graphisch dargestellt werden.

Für den Zahlungsakzeptor gilt, daß dieser nicht nur, wie bisher größten Teils noch üblich, als richtiger Münzprüfer ausgebildet ist, sondern daß dieser auch in der Form eines Kartenprüfers ausgeführt sein kann, welcher Guthaben auf entsprechenden Karten überprüft bzw. löscht und übernimmt. Die Aufzählung der Art des Münzprüfers ist nicht einschränkend sondern beispielhaft zu verstehen.

Nachfolgend ist die Erfindung anhand mehrerer, verschiedene Ausführungsformen darstellender Figuren näher erklärt.

Es zeigen:
- Figur 1:: ein erfindungsgemäßes Bedienungsgerät mit Zahlungsakzeptor oder auch Münzer genannt und Wahlschalter zur Auswahl des gewünschten Reinigungsplatzes,
- Figur 2:: die Darstellung wie in Figur 1 mit zusätzlicher Guthabenanzeige für den jeweiligen Reinigungsplatz A, B und
- Figur 3:: eine weitere Ausführungsform der vorliegenden Erfindung mit Kartenlesegerät und einer Anzeige- und Auswahleinheit in Bildschirmform.

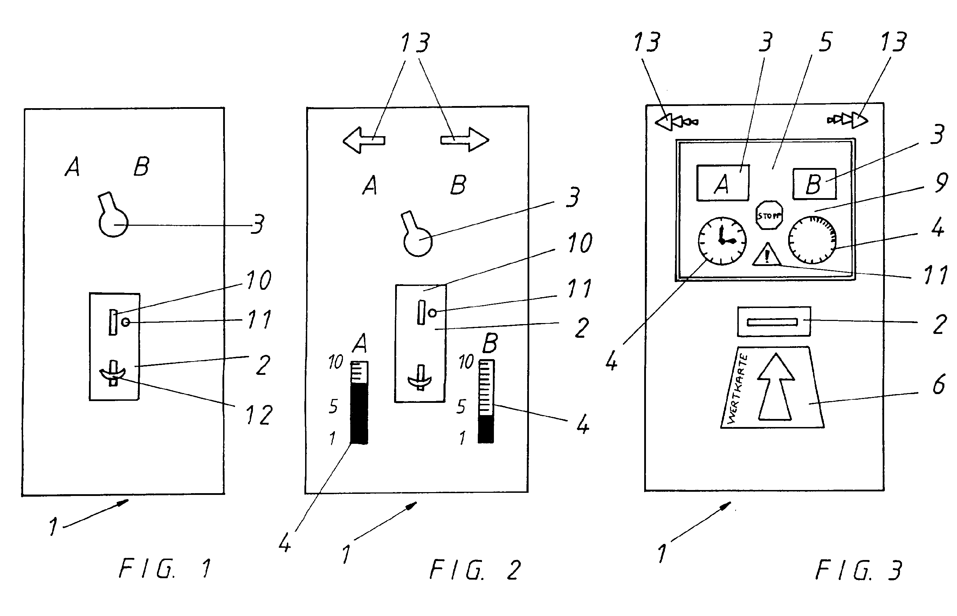

Die Figur 1 zeigt die Vorderansicht eines erfindungsgemäßen Bediengerätes für einen SB-Tandem-Reinigungs- und/oder Pflegeplatz für Kfz. Das Bediengerät 1 beinhaltet einen Münzer 2 mit einem Einwurfschlitz 10, einem Rückgabeknopf 11 und einem Auswurfschlitz 12. Ebenfalls ist ein Auswahlschalter 3 vorgesehen, der die Auswahl des Platzes A oder B ermöglicht. Durch die Einstellung des Auswahlschalters erfolgt die Auswahl des Platzes und der Kunde hat die Möglichkeit sein Guthaben Durch Einwurf von Münzen aufzustocken und dadurch die Bedienzeit des ausgewählten Platzes zu verlängern. Nach Auswahl des richtigen Platzes -A oder B- und durch den Einwurf einer oder mehrerer Münzen in den Einwurfschlitz 10 verlängert also der Kunde die Freigabezeit des Reinigungsgerätes, so daß er weiter entweder sein Auto waschen oder saugen kann, abhängig davon, ob es sich um einen Waschplatz oder um einen Saugplatz handelt.

Nachdem ein Kunde beispielsweise den Platz A mit entsprechendem Guthaben aufgefüllt hat, kann dieser die Einrichtungen auf dem Platz A benutzen und während dessen kann ein zweiter Kunde den Wahlschalter auf die Stellung Platz B schalten und ebenfalls Münzen in den Einwurfschlitz 10 einwerfen, so daß er sein Guthaben für den zweiten Platz, also für den Platz B, entsprechend aufstocken kann und die vorhandenen Geräte nutzen kann.

In Figur 2 ist eine erweiterte Ausführungsform der vorliegenden Erfindung dargestellt. Hierbei handelt es sich um eine Ausführungsform, welche zusätzlich zur Ausführungsform in Figur 1 eine Guthabenanzeige sowohl für den Platz A als auch für den Platz B beinhaltet. Diese beiden Anzeigen 4 sind entsprechend skaliert, so daß der Kunde sein Guthaben ablesen kann. Zusätzlich sind noch Pfeile 13 angeordnet, die dem Kunden zeigen, an welcher Seite der Platz A bzw. der Platz B gelegen ist.

Auch hier ist also der Vorteil der Nutzung eines einzelnen Münzers für einen SB-Tandem-Reinigungsplatz klar erkennbar.

In der dritten Ausführungsform der vorliegenden Erfindung nach Figur 3 ist es vorgesehen, daß das Bedienungsgerät 1 einen Bildschirm 5 aufweist, welcher sowohl Bedien- als auch Anzeigegeräte beinhaltet. Dabei sind die Positionen 3 mit den Bezeichnungen A und B die Schaltflächen für die Auswahl des entsprechenden Platzes. Diese beiden Schaltfunktionen sind gegeneinander verriegelt, so daß nur entweder der Platz A oder der Platz B ausgewählt werden kann. Der ausgewählte Platz erscheint deutlich sichtbar hinterlegt am Bildschirm, während der nicht ausgewählte Platz in einer weniger gut sichtbaren Darstellung erscheint. Die Guthabenanzeigen 4 sind in dieser Ausführungsform in der Form einer Uhr dargestellt. Dabei ist für den Platz A eine Zeigerform ausgewählt und für den Platz B, jedoch nur beispielhaft für entsprechende Ausführungsformen, eine Darstellung in etwa einer Tachoform, bei der durch einen entsprechenden Farb- oder Intensitätsumschlag das Guthaben erkennbar ist.

Im weiteren sind in der Bildfläche des Bildschirms 5 Pfeile 13 für die Richtungsanzeige des Platzes angezeigt, und für die Wiedergabe einer Wertkarte aus der Wertkarteneinziehvorrichtung in der Form des Münzers 2 ein Schalt- oder Bediensymbol für einen Rückgabknopf 11. Dieses Schaltsymbol 11 bewirkt, daß eine Wertkarte, welche in den Münzer 2 eingeschoben wurde, auf Wunsch wieder freigegeben werden kann ohne das ein Abzug eines Guthabens stattgefunden hat. Eine zusätzliche Funktion dieser Ausführungsform ist mit dem Bediensymbol für den Stopschalter 9 gegeben dessen Bedienung den Abbruch des aktuellen Vorganges bewirkt.

### Zeichnungslegende

- 1.: Bedienungsgerät
- 2.: Münzer
- 3.: Wahlschalter
- 4.: Guthabenanzeige
- 5.: Bildschirm
- 6.: . Wertkarte
- 7.: -
- 8: -
- 9.: Stoppschalter
- 10.: . Einwurfschlitz
- 11.: . Rückgabeknopf
- 12.: . Auswurfschlitz
- 13.: Pfeile

## Patentansprüche

1. Bedienungsgerät für eine Tandem-Reinigungs- und/oder Pflegestation für Kfz, in oder auf welcher Reinigungs- und/oder Pflegearbeiten im Selbstbedienbetrieb auf zwei getrennten Plätzen A oder B durchgeführt werden, wobei das Bedienungsgerät dafür vorgesehen ist, ein Zeit- oder Wertguthaben in einer Zeit- oder Wertguthabenspeichereinrichtung pro Reinigungs- oder Pflegeplatz durch den Einwurf von Münzen oder durch die Eingabe von Wertkarten, mit der Abbuchung eines entsprechenden Guthabens von der Wertkarte, einzurichten, und den Betrieb der Reinigungs- und/oder Pflegegeräte für einen entsprechenden Zeitraum freizugeben, **dadurch gekennzeichnet, daß** für beide Zeit- oder Wertguthabenspeichereinrichtungen A und B lediglich ein einziger Münzer (2) für die Eingabe von Münzen und/oder Wertkarten (6) vorhanden ist, welcher in Verbindung mit einer Auswahleinheit (3) ein Guthaben für den ausgewählten Reinigungsplatz A oder B entgegen nimmt.

2. Bedienungsgerät nach Anspruch 1, **dadurch gekennzeichnet, daß** der eine Münzer (2) die Guthabeneingabe überprüft und das Guthaben an die ausgewählte Zeit- oder Wertguthabenspeichereinrichtung weitergibt.

3. Bedienungsgerät nach einem der Ansprüche 1 oder 2, **dadurch gekennzeichnet, daß** eine Guthabenanzeige (4) für den ausgewählten Reinigungsplatz A oder B vorhanden ist.

4. Bedienungsgerät nach einem der Ansprüche 1 bis 3, **dadurch gekennzeichent, daß** die Auswahleinheit (3) in der Form eines tastempfindlichen Bildschirms realisiert ist.

5. Bedienungsgerät nach einem der Ansprüche 1 bis 4, **dadurch gekennzeichnet, daß** die Guthabenanzeige (4) für den ausgewählten Reinigungsplatz A oder B in der Form einer Bildschirmdargestellung realisiert ist.

6. Bedienungsgerät nach einem der Ansprüche 1 bis 5, **dadurch gekennzeichnet, daß** sowohl die Auswahleinheiten (3) als auch die Guthabenanzeigeeinheiten (4) in der Form eines tastempfindlichen Bildschirms realisiert sind.

7. Bedienungsgerät nach einem der Ansprüche 4 oder 6, **dadurch gekennzeichnet, daß** die Auswahleinheit (3) verriegelbar ist.

8. Bedienungsgerät nach einem der Ansprüche 1 bis 7, **dadurch gekennzeichnet, daß** im Bildschirm (5) ein Bediensymbol (11) für den Befehl zur Wiedergabe der Wertkarte (6) angeordnet ist.

9. Bedienungsgerät nach Anspruch 8, **dadurch gekennzeichnet, daß** mit dem Symbol für die Rückgabe (11) im Bildschirm (5) ein Abbruch der Guthabenabbuchung für den entsprechenden Reinigungsplatz durchgeführt werden kann.

10. Bedienungsgerät nach einem der Ansprüche 1 bis 9, **dadurch gekennzeichnet, daß** im Bildschirm (5) ein Bediensymbol als Stoppschalter (9) für den Abbruch des Vorgangs angeordnet ist.
